# EUROPÄISCHE PATENTSCHRIFT

(11) **EP 2 896 649 B1**
(45) Veröffentlichungstag und Bekanntmachung des Hinweises auf die Patenterteilung: **23.05.2018**
(21) Anmeldenummer: 14151702.9
(22) Anmeldetag: 20.01.2014
(51) Int. Cl.: B29C 41/20, B29K 19/00, B29L 31/26, C08K 3/00, C08K 3/013, C08K 3/04, C08K 5/04, C08K 5/09, C08K 5/14, C08K 5/3415, C08K 5/3447, C08K 5/36, C08L 23/22, F01D 11/00, F04D 19/04, F04D 29/02, F04D 29/08, F16J 15/00, C08K 3/22

(54) **Dichtmaterial**
Sealing material
Matériau d'étanchéité

(43) Veröffentlichungstag der Anmeldung: 22.07.2015
(73) Patentinhaber: Enrichment Technology Company Ltd. Zweigniederlassung Deutschland, 52428 Jülich (DE)
(72) Erfinder: Jurgens, Wolfgang, 41812 Erkelenz (DE)
(74) Vertreter: Jostarndt Patentanwalts-AG

(56) Entgegenhaltungen:
- WO-A1-03/078538
- GB-A- 1 533 181
- US-A- 5 157 081
- DUTTA N K ET AL: "Influence of curing systems on the properties of bromobutyl rubber: Part III-Effect of different types of curing systems on the cure characteristics, physical properties and thermo-oxidative degradation characteristics", POLYMER DEGRADATION AND STABILITY, BARKING, GB, Bd. 36, Nr. 1, 1. Januar 1992 (1992-01-01) , Seiten 73-80, XP024143956, ISSN: 0141-3910, DOI: 10.1016/0141-3910(92)90051-6 [gefunden am 1992-01-01]

## Beschreibung

### Gebiet der Erfindung

Die Erfindung bezieht sich auf eine Vakuumdichtung aus diesem Dichtmaterial und ein Verfahren zur Herstellung einer solchen Vakuumdichtung aus diesem Dichtmaterial.

### Hintergrund der Erfindung

Dichtmaterialien werden zum Abdichten eines Volumens gegenüber einem anderen Volumen verwendet. Hierbei können die Dichtungen beispielsweise zum Fernhalten von schädlichen Gasen oder als Vakuumdichtung zum Erreichen / Erhalten eines Vakuums dienen. Je nach Anwendung werden sehr unterschiedliche und zum Teil hohe Anforderungen gestellt, beispielsweise eine gute Beständigkeit gegen aggressive Gase oder eine niedrige Permeationsrate für beispielsweise Wasser, Helium, Stickstoff oder Sauerstoff (z.B. elektrische Schaltelemente). Weitere wichtige Eigenschaften von Dichtungen sind deren Beständigkeit gegen Betriebstemperaturen, Beständigkeit gegen Öle, Zugfestigkeit, Reißfestigkeit, Druckverformungsresistenz, Ausgasverhalten im Vakuum oder deren Vakuumleckrate.

Heutzutage steht kein preiswertes Dichtmaterial zur Verfügung, dass alle obigen Anwendungen gleichermaßen gut erfüllen kann. Es werden für die einzelnen Anwendungen je nach Anforderungsprofil verschiedene Dichtungen mit unterschiedlichem Dichtmaterial verwendet. Zum Teil müssen dafür Metalldichtungen als Einmaldichtungen verwendet werden. Somit müssen verschiedene Dichtungen für technische Anlagen vorgehalten werden. Es wäre wünschenswert, wenn ein einziges Dichtmaterial zur Verfügung stehen würde, aus dem Dichtungen gefertigt werden könnten, die die verschiedensten Anforderungen gleichermaßen erfüllen würden. Es ist weiterhin wünschenswert, wenn Dichtungen aus diesem Dichtmaterial wiederverwendbar wären, um den Materialverbrauch zu reduzieren.

### Zusammenfassung der Erfindung

Es ist eine Aufgabe der vorliegenden Erfindung, eine Vakuumdichtung bereitzustellen, das geeignet ist, die verschiedensten Anforderungen an daraus gefertigte Dichtungen zu erfüllen. Eine weitere Aufgabe der Erfindung ist die Herstellung solcher (Gas)Dichtung.

Diese Aufgabe wird gelöst durch eine Vakuumdichtung aus einem Dichtmaterial, das als Bestandteile ein Brombutyl-Elastomer mit einem Anteil von 100 Gewichtsanteilen, ein Füllmaterial mit einem Anteil zwischen 10 und 100 Gewichtsanteilen zur Einstellung des Volumens des Dichtmaterials, einen Härter mit einem Anteil zwischen 0,5 und 3,0 Gewichtsanteilen zum Aushärten des Dichtmaterials und eine Vernetzungskomponente mit einem Anteil zwischen 0,1 und 2,0 Gewichtsanteilen zur Herstellung einer peroxidischen Vernetzung des Dichtmaterials zur Bereitstellung der gewünschte Gasdichtigkeit umfasst.

Der Begriff "Anteil" bezieht sich hier auf relative Mengenverhältnisse der einzelnen Bestandteile zueinander bezogen auf das jeweilige Gewicht der einzelnen Bestandteile als solche. Wie viel ein entsprechend hergestelltes Dichtmaterial an absolutem Gesamtgewicht besitzt, hängt von der jeweiligen Anwendung ab. Beispielsweise könnte ein Dichtmaterial dabei 100g an Brombutyl-Kautschuk als Brombutyl-Elastomer, 45g Füllmaterial, 2 g Härter und 1 g Vernetzungskomponente im Rahmen der vorliegenden Erfindung umfassen.

Dichtungen, insbesondere Gasdichtungen, umfassen als Hauptkomponente ein Elastomer zur Herstellung der Dichtwirkung aufgrund eines ausgeübten Drucks auf die Dichtung zwischen den jeweiligen Dichtflächen. Der erfindungsgemäße Brombutyl-Kautschuk als verwendetes Elastomer (Brombutyl-Elastomer) ermöglicht gegenüber Dichtmaterialien gemäß dem Stand der Technik eine besonders hohe Vakuumdichtigkeit (entspricht eine kleinen Leckrate) und eine Beständigkeit einerseits gegenüber aggressiven Gasen und andererseits gegenüber Pumpenölen, wie beispielsweise Perfluorpolyethen-Öl oder Silikon-Öl. Das Füllmaterial, beispielsweise Ruß, bewirkt diese Eigenschaften nicht selber, stellt aber auf günstige Weise als auffüllendes Material ein verarbeitbares Volumen des Dichtmaterials her.

Der Härter, beispielsweise ein organisches Peroxid, ermöglicht in Kombination mit einer geeigneten Vernetzungskomponente die gleichmäßige und vollständige, formgebende Aushärtung des Dichtmaterials, wobei diese sowohl eine schwefelartige Vernetzung oder eine peroxidische Vernetzung sein kann. Die Vernetzungskomponente, beispielsweise ein Dimaleimid, dient als multifunktionales Reagenz für peroxidisch vernetzte Elastomere. Durch das Zusammenspiel von Elastomer, Füller, Härter und Vernetzungskomponente werden die voranstehend aufgeführten Materialeigenschaften des erfindungsgemäßen Dichtmaterials erreicht.

Das erfindungsgemäße Dichtmaterial ist geeignet, die verschiedensten Anforderungen an daraus gefertigte Vakuumdichtungen wie beispielsweise eine gute Beständigkeit gegen aggressiven Gasen, eine niedrige Permeationsrate für beispielsweise Wasser, Helium, Stickstoff oder Sauerstoff (z.B. elektrische Schaltelemente), eine gute Beständigkeit gegen Betriebstemperaturen oder gegen Öle (Pumpenöle), eine gute Zugfestigkeit, Reißfestigkeit, Druckverformungsresistenz, ein geringes bis vernachlässigbares Ausgasverhalten im Vakuum und eine sehr geringe Vakuumleckrate zu erfüllen.

In einer Ausführungsform umfasst das Dichtmaterial einen Weichmacher mit einem Anteil kleiner 3 Gewichtsanteilen, vorzugweise zwischen 0,3 und 1,5 Gewichtsanteilen, zur besseren Verarbeitbarkeit des Dichtmaterials. Je mehr Weichmacher im Rahmen der vorliegenden Erfindung im Dichtmaterial vorhanden ist, desto weicher ist das fertige Dichtmaterial, nachdem es in die geeignete Form gebracht und ausgehärtet worden ist. Der Weichmacheranteil sollte aber nicht größer als notwendig sein, da Weichmacher in der späteren Anwendung des Dichtmaterials in einer Gasdichtung herausgelöst werden kann. Dies ist insbesondere bei Vakuumdichtungen nachteilig, da so Moleküle aus dem Dichtmaterial ins Vakuum abdampfen und das erreichbare Endvakuum zumindest für ein von der Pumpleistung abhängiges Zeitintervall verschlechtert. Darüber hinaus kann der Weichmacher innerhalb des evakuierten Bereichs in unerwünschter Weise chemisch reagieren oder sich ablagern. Weichmacher sind vorzugsweise gesättigte Carbonsäuren oder Fettsäuren. Ein Ausführungsbeispiel für einen geeigneten Weichmacher ist Stearinsäure.
In einer Ausführungsform umfasst das Dichtmaterial als zusätzlichen Bestandteil ein Material zur Säureneutralisierung mit einem Anteil kleiner 5,0 Gewichtsanteilen, vorzugsweise zwischen 0,5 und 3,0 Gewichtsanteilen. Das Material zur Säureneutralisierung ist ein Säureakzeptor für halogenierte Polymere. In diesem Material wird der Neutralisierungseffekt beispielsweise durch aktiviertes MgO eingebettet in einem organischen Binder bewirkt. Der Binder schützt das MgO vor einer Feuchtigkeitsaufnahme und damit vor einer vorzeitigen Umwandlung in Mg(OH)₂. Ein Ausführungsbeispiel für ein geeignetes Material zur Säureneutralisierung ist Maglite DE.

In einer Ausführungsform umfasst das Dichtmaterial als zusätzlichen Bestandteil ein Antioxidant-Material mit einem Anteil kleiner 5,0 Gewichtsanteilen, vorzugsweise zwischen 0,5 und 3,0 Gewichtsanteilen. Mit diesem Antioxidant-Material können reaktive Bestandteile des Dichtmaterials oder Verbindungen, die aus der Umgebung der Gasdichtung das Dichtmaterial erreichen, chemisch passiviert werden, damit die Vernetzung des Dichtmaterials nicht negativ beeinflusst wird. Dies ist insbesondere als Schutz gegen schädliche Oxidationsreaktionen vorteilhaft. Ein Ausführungsbeispiel für ein geeignetes Antioxidant-Material ist Vulkanox MB2/MG.

In einer Ausführungsform ist das Füllmaterial chemisch inert, damit die vorher durch die anderen Bestandteile eingestellten Materialeigenschaften des Dichtmaterial nicht negativ beeinflusst werden können. In einer Ausführungsform ist das Füllmaterial Statex N550. In einer bevorzugten Ausführungsform ist das Füllmaterial Ruß. In einer anderen bevorzugten Ausführungsform liegt der Anteil des Füllmaterials an dem Dichtmaterial zwischen 70 und 100 Gewichtsanteilen. Bei diesem Anteil an Füllmaterial ist der Härtegrad des Dichtmaterials und damit der späteren Vakuumdichtung aus diesem Dichtmaterial höher. Bei geringerem Anteil an Füllmaterial kann man weichere Vakuumdichtungen aus dem Dichtmaterial herstellen.

Die erfindungsgemäße Vakuumdichtung ist geeignet, die verschiedensten Anforderungen wie beispielsweise eine gute Beständigkeit gegen aggressive Gase, eine niedrige Permeationsrate für beispielsweise Wasser, Helium, Stickstoff oder Sauerstoff (z.B. elektrische Schaltelemente) eine gute Beständigkeit gegen Betriebstemperaturen oder gegen Öle (Pumpenöle), eine gute Zugfestigkeit, Reißfestigkeit, Druckverformungsresistenz, ein geringes bis vernachlässigbares Ausgasverhalten im Vakuum und eine sehr geringe Vakuumleckrate zu erfüllen.

In einer Ausführungsform ist die Vakuumdichtung als O-Ring-Dichtung ausgestaltet. O-Ringe sind ringförmige Dichtelemente, wobei die Form auch von der kreisförmigen Form abweichen kann. Beispielsweise können O-Ringe auch elliptisch sein. Aufgrund der relativ einfachen Form sind O-Ringe industriell leicht herstellbar. Vorzugsweise findet das Spritzgießen (Injection Moulding) Anwendung, bei geringeren Stückzahlen können O-Ringe auch mittels Formpressen (Compression Moulding) gefertigt werden. Aufgrund seines kreisrunden Querschnitts kann ein O-Ring axial und/oder radial abdichten. Durch die Pressung des Gummikörpers beim Einbau (sowohl in radialer und/oder in axialer Richtung) kommt die Anfangsdichtheit zustande. Die Dichtpressung ergibt sich aus der Überlagerung der Vorpressung (durch den Einbau) und dem abzudichtenden Systemdruck. In der Dichtfuge herrscht daher immer eine um die Vorpressung höhere Dichtpressung als der abzudichtende Druck. Deshalb sind sehr hohe Drücke abdichtbar. O-Ringe werden üblicherweise in verschiedenen Standardgrößen gefertigt

In einer Ausführungsform ist die Vakuumdichtung als Metall-Elastomer-Verbunddichtung mit einem geeignet geformten Metallkern umhüllt von dem Dichtmaterial ausgestaltet. Als Metall kann dabei beispielsweise Kupfer verwendet werden. Der Begriff Verbunddichtung bezeichnet hier eine Dichtung, wo der Metallkern von der Dichtmasse umhüllt ist, nicht aber ein Mischmaterial aus Dichtmaterial mit Metallanteilen. Eine solche Verbunddichtung kann größeren Flanschdrücken (Druck der Dichtflächen auf die Dichtung) standhalten als eine Dichtung ohne Metallkern. Die Form des Metallkerns ist dabei auf die Form der späteren Vakuumdichtung angepasst. Beispielsweise kann der Metallkern als flacher Ring oder im Fall einer O-Ring-Dichtung als Metallring mit einem Querschnitt kleiner als der Querschnitt der späteren Vakuumdichtung, beispielsweise des späteren O-Rings, geformt sein. Solche Verbunddichtungen weisen eine geringere Leckrate als Gasdichtungen alleine aus dem erfindungsgemäßen Dichtmaterial auf und können im Gegensatz zu puren Metalldichtungen wiederverwendet werden.

In einer Ausführungsform wird die erfindungsgemäße Vakuumdichtung als Vakuumdichtung verwendet. In einer bevorzugten Ausführungsform sind dabei die Bestandteile des Dichtmaterials so gewählt, dass die Vakuumdichtung eine Leckrate kleiner als 10⁻⁹ mbar*L/s besitzt. In einer Ausführungsform der erfindungsgemäßen Dichtmasse für eine Vakuumdichtung mit einer Leckrate kleiner 10⁻⁹ mbar*L/s umfasst die Dichtmasse als Elastomer Brombutylkautschuk mit 100 Gewichtsanteilen, das Füllmaterial mit 45 ± 4,0 Gewichtsanteilen (beispielsweise Statex N550 als Füllmaterial), das Material zur Säureneutralisation (Säureneutralisator) mit 1,0 ± 0,2 Gewichtsanteilen (beispielsweise Maglite DE als Säureneutralisator), den Weichmacher mit 1,0 ± 0,2 Gewichtsanteilen (beispielsweise Stearinsäure als Weichmacher), das Antioxidant-Material mit 1,0 ± 0,2 Gewichtsanteilen (beispielsweise Vulkanox MB2/MG als Antioxidant-Material), den Härter mit 2,0 ± 0,3 Gewichtsanteilen (beispielsweise Perkadox BC-40B-PD als Härter), die Vernetzungskomponente mit 1,0 ± 0,2 Gewichtsanteilen (beispielsweise N,N' m-Phenylendimaleimid als Vernetzungskomponente) und optional Polyethylenglukol mit 1,5 ± 0,3 Gewichtsanteilen (beispielsweise PEG 4000). In einer Ausführungsform wird dieses Dichtmaterial in einer Metall-Elastomer-Verbunddichtung verwendet.

Damit besitzt die Vakuumdichtung aus dem erfindungsgemäßen Dichtmaterial für Kautschuk-Dichtungen hervorragende Dichteigenschaften, die sonst nur durch teure und nur einmalig verwendbare Metalldichtungen (Kupferdichtungen) erreichbar wären. Die erfindungsgemäße Vakuumdichtung stellt gegenüber Metalldichtungen eine preiswerte und zuverlässige Alternative dar, die obendrein wiederverwendbar ist und somit ein schnelles Öffnen und wieder Schließen der Vakuumanlage ohne Austausch der Vakuumdichtung ermöglicht.

Die Erfindung betrifft des Weiteren ein Verfahren zur Herstellung einer erfindungsgemäßen Vakuumdichtung umfassend die Schritte
- Bereitstellen eines Dichtmaterials umfassend ein Brombutyl-Elastomer mit einem Anteil von 100 Gewichtsanteilen, ein Füllmaterial mit einem Anteil zwischen 10 und 100 Gewichtsanteilen zur Einstellung des Volumens des Dichtmaterials, einen Härter mit einem Anteil zwischen 0,5 und 3,0 Gewichtsanteilen zum Aushärten des Dichtmaterials und eine Vernetzungskomponente mit einem Anteil zwischen 0,1 und 2,0 Gewichtsanteilen zur Herstellung einer peroxidischen Vernetzung des Dichtmaterials zur Bereitstellung der gewünschten Gasdichtigkeit;
- Formen der Vakuumdichtung aus dem Dichtmaterial; und
- Aushärten des Dichtmaterials der geformten Vakuumdichtung bei einer geeigneten Aushärtetemperatur und einer geeigneten Aushärtezeit zur Fertigstellung der Vakuumdichtung.

Die Formung der Vakuumdichtung (gasdichte Dichtung) kann beispielsweise durch einen Pressvorgang in einer entsprechenden Maschine erfolgen. Hierbei können die für die Herstellung von Vakuumdichtungen, beispielsweise Dichtringen, bekannten und üblichen Maschinen und Verfahren angewendet werden. Die Begriffe "geeignete Aushärtetemperatur" und "geeignete Aushärtezeit" stehen in einem Zusammenhang zueinander. Je höher die Aushärtetemperatur ist, desto kürzer kann die Aushärtezeit sein. Andersherum benötigt eine Gasdichtung aus dem erfindungsgemäßen Dichtmaterial bei einer geringeren Aushärtetemperatur eine längere Aushärtezeit. Beispielsweise könnte die Aushärtetemperatur für eine Aushärtezeit zwischen 4 und 7 Minuten zwischen 90 und 110°C liegen. In einem anderen Ausführungsbeispiel könnte beispielsweise die Aushärtetemperatur für eine Aushärtezeit zwischen 1 und 2 Minuten zwischen 170 und 200°C liegen

In einer Ausführungsform umfasst das Verfahren des Weiteren den Schritt des Einstellens des verfügbaren Zeitintervalls zur Verarbeitung des Dichtmaterials zu einer Vakuumdichtung mittels Anpassung des Anteils des Weichmachers.

In einer Ausführungsform umfasst der Schritt des Formens der Vakuumdichtung den Schritt des Umhüllens eines geeignet geformten Metallkerns mit dem Dichtmaterial zur Herstellung einer Metall-Elastomer-Verbunddichtung. Die Umhüllung geschieht hierbei verzugsweise vollständig.

### Kurze Beschreibung der Abbildungen

Diese und andere Aspekte der Erfindung werden im Detail in den Abbildungen wie folgt gezeigt:
- Fig.1:: verschiedene Ausführungsformen (a) - (c) einer erfindungsgemäßen Vakuumdichtung;
- Fig.2:: eine Ausführungsform einer erfindungsgemäßen Metall-Elastomer-Verbunddichtung in (a) Draufsicht und (b) im seitlichen Schnitt;
- Fig.3:: eine Ausführungsform der Herstellung einer erfindungsgemäßen Vakuumdichtung.

### Detaillierte Beschreibung der Ausführungsbeispiele

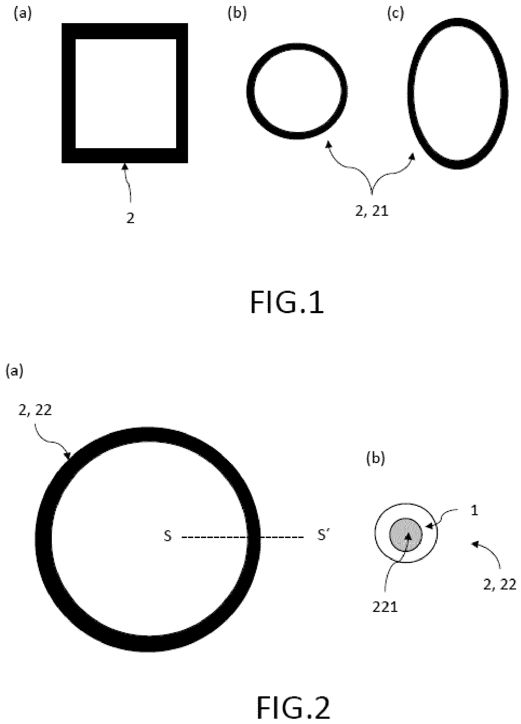

Fig.1 zeigt drei Ausführungsformen (a) - (c) einer erfindungsgemäßen Vakuumdichtung 2, wobei die Vakuumdichtung 2 verschiedene geometrische Formen besitzen kann. Beispielsweise kann die Vakuumdichtung 2 in Draufsicht (a) eine rechteckige Form, (b) eine mehr oder weniger runde Form und (c) eine ovale oder elliptische Form besitzen. Die Querschnitte (hier nicht gezeigt) der Vakuumdichtungen 2 können in Abhängigkeit von der jeweiligen Anwendung unterschiedlich ausgestaltet sein, beispielsweise als runder oder rechteckiger Querschnitt. Der Querschnitt kann auch eine andere Form angepasst an die jeweiligen Dichtflächen besitzen. Unabhängig von der Form ist die erfindungsgemäße Vakuumdichtung 2 geeignet, die verschiedensten Anforderungen wie beispielsweise eine gute Beständigkeit gegen aggressive Gase, eine niedrige Permeationsrate für beispielsweise Wasser, Helium, Stickstoff oder Sauerstoff (z.B. elektrischen Schaltelementen) eine gute Beständigkeit gegen Betriebstemperaturen oder gegen Öle (Pumpenöle), eine gute Zugfestigkeit, Reißfestigkeit, Druckverformungsresistenz, ein geringes bis vernachlässigbares Ausgasverhalten im Vakuum und eine sehr geringe Vakuumleckrate zu erfüllen. In einer Ausführungsform ist die Gasdichtung 2 als O-Ring-Dichtung 21 ausgestaltet. O-Ringe 21 sind ringförmige Dichtelemente, wobei die Form auch von der kreisförmigen Form abweichen kann, siehe Fig.1b und c.

Fig.2 zeigt eine Ausführungsform einer erfindungsgemäßen Metall-Elastomer-Verbunddichtung 22 in (a) Draufsicht und (b) im seitlichen Schnitt entlang der Schnittebene S-S'. Hierbei ist die Metall-Elastomer-Verbunddichtung 22 mit einem geeignet geformten Metallkern 221 umhüllt von dem Dichtmaterial 1 ausgestaltet. Der Querschnitt der Metall-Elastomer-Verbunddichtung 22 ist in dieser Ausführungsform kreisförmig, wobei der Metallkern 221 ebenfalls einen kreisförmigen Querschnitt besitzt. Bei anderen Anwendungen kann der Querschnitt der Metall-Elastomer-Verbunddichtung 22 auch rechteckig oder andersartig ausgestaltet sein. Entsprechend kann der Metallkern 221 dann ebenfalls einen rechteckigen oder andersartigen Querschnitt besitzen. In dieser Ausführungsform ist der Metallkern 221 zudem vollständig von dem Dichtmaterial 1 umhüllt. In anderen Ausführungsformen könnte der Metallkern 221 auch nur unvollständig von Dichtmaterial 1 umhüllt sein.

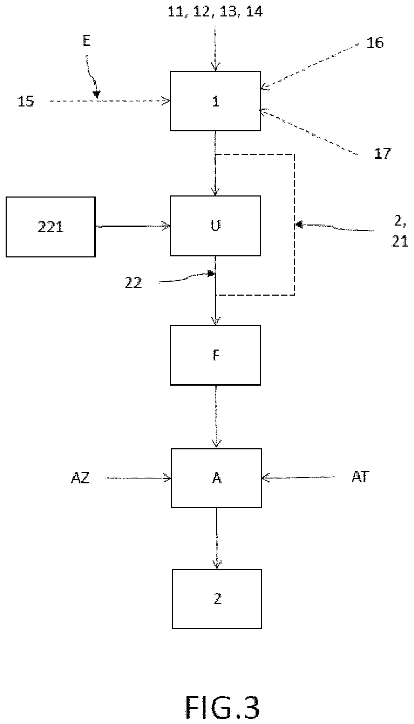

Fig.3 zeigt eine Ausführungsform der Herstellung einer erfindungsgemäßen Vakuumdichtung 2. Für die Herstellung der Vakuumdichtung 2 wird zunächst das Dichtmaterial 1 bereitgestellt, das in dieser Ausführungsform zumindest ein Brombutyl-Elastomer 11 mit einem Anteil von 100 Gewichtsanteilen, ein Füllmaterial 12 mit einem Anteil zwischen 10 und 100 Gewichtsanteilen zur Einstellung des Volumens des Dichtmaterials 1, einen Härter 13 mit einem Anteil zwischen 0,5 und 3,0 Gewichtsanteilen zum Aushärten des Dichtmaterials 1 und eine Vernetzungskomponente 14 mit einem Anteil zwischen 0,1 und 2,0 Gewichtsanteilen zur Herstellung einer peroxidischen Vernetzung des Dichtmaterials 1 zur Bereitstellung der gewünschten Gasdichtigkeit umfasst. Optional kann des Weiteren das verfügbare Zeitintervall zur Verarbeitung des Dichtmaterials 1 zu einer Vakuumdichtung 2 mittels Anpassung des Anteils des Weichmachers 15 eingestellt E werden. Dazu hat der Weichmacher 15 einen Anteil kleiner 3 Gewichtsanteilen, vorzugsweise zwischen 0,3 und 1,5 Gewichtsanteilen. Des Weiteren kann als zusätzlichen Bestandteil ein Material zur Säureneutralisierung 16 mit einem Anteil kleiner 5,0 Gewichtsanteilen, vorzugsweise zwischen 0,5 und 3,0 Gewichtsanteilen und/oder ein Antioxidant-Material (17) mit einem Anteil kleiner 5,0 Gewichtsanteilen, vorzugsweise zwischen 0,5 und 3,0 Gewichtsanteilen zum Dichtmaterial 1 hinzugegeben werden. Die optionalen Komponenten 15, 16, 17 des erfindungsgemäßen Dichtmaterials sind durch gestrichelte Pfeile dargestellt. Des Weiteren kann optional noch Polyethylenglukol mit 1,5 ± 0,3 Gewichtsanteilen hinzugegeben werden (hier nicht gezeigt). Nachdem das Dichtmaterial 1 in der gewünschten Zusammensetzung vorliegt, wird die Vakuumdichtung 2 aus dem Dichtmaterial 1 geformt F. Hierbei kann je nach Ausführungsform der Vakuumdichtung 2 der Schritt des Formens F der Vakuumdichtung 2 den Schritt des Umhüllens U eines geeignet geformten Metallkerns 221 mit dem Dichtmaterial 1 zur Herstellung einer Metall-Elastomer-Verbunddichtung 22 mit umfassen, wobei zunächst der Metallkern 221 mit Dichtmaterial 1 umhüllt und danach die Vakuumdichtung 2 endgültig ausgeformt F wird. Die Formung F der Vakuumdichtung 2 (gasdichte Dichtung 2) kann beispielsweise durch einen Pressvorgang in einer entsprechenden Maschine erfolgen. Hierbei können die für die Herstellung von Vakuumdichtungen 2, beispielsweise Dichtringen, bekannten und üblichen Maschinen und Verfahren angewendet werden. Das nachfolgende Aushärten A des Dichtmaterials 1 der geformten Vakuumdichtung 2 geschieht bei einer geeigneten Aushärtetemperatur AT und einer geeigneten Aushärtezeit AZ. Dabei stehen Aushärtetemperatur AT und Aushärtezeit AZ in einem Zusammenhang zueinander. Je höher die Aushärtetemperatur AT ist, desto kürzer kann die Aushärtezeit AZ sein. Andersherum benötigt eine Vakuumdichtung 2 aus dem erfindungsgemäßen Dichtmaterial 1 bei einer geringeren Aushärtetemperatur AT eine längere Aushärtezeit AZ. Beispielsweise könnte die Aushärtetemperatur AT für eine Aushärtezeit AZ zwischen 4 und 7 Minuten zwischen 90 und 110°C liegen. In einem anderen Ausführungsbeispiel könnte beispielsweise die Aushärtetemperatur AT für eine Aushärtezeit AZ zwischen 1 und 2 Minuten zwischen 170 und 200°C liegen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: erfindungsgemäßes Dichtmaterial
- 11: Brombutyl-Elastomer (Brombutyl-Kautschuk)
- 12: Füllmaterial
- 13: Härter
- 14: Vernetzungskomponente
- 15: Weichmacher
- 16: Material zur Säureneutralisierung (Säureneutralisator)
- 17: Antioxidant-Material
- 2: Vakuumdichtung
- 21: O-Ring-Dichtung
- 22: Metall-Elastomer-Verbunddichtung
- 221: Metallkern

- A: Aushärten des Dichtmaterial
- AT: Aushärtetemperatur
- AZ: Aushärtezeit
- E: Einstellen des verfügbaren Zeitintervalls zur Verarbeitung des Dichtmaterials
- F: Formen der Vakuumdichtung
- S, S':: Schnittebene in Fig.2
- U: Umhüllen des Metallkerns mit Dichtmaterial

## Patentansprüche

1. Eine Vakuumdichtung (2) aus einem Dichtmaterial (1), das als Bestandteile ein Brombutyl-Elastomer (11) mit einem Anteil von 100 Gewichtsanteilen, ein Füllmaterial (12) mit einem Anteil zwischen 10 und 100 Gewichtsanteilen zur Einstellung des Volumens des Dichtmaterials (1), einen Härter (13) mit einem Anteil zwischen 0,5 und 3,0 Gewichtsanteilen zum Aushärten des Dichtmaterials (1) und eine Vernetzungskomponente (14) mit einem Anteil zwischen 0,1 und 2,0 Gewichtsanteilen zur Herstellung einer peroxidischen Vernetzung des Dichtmaterials (1) zur Bereitstellung der gewünschte Gasdichtigkeit umfasst.

2. Die Vakuumdichtung nach Anspruch 1,
**dadurch gekennzeichnet,**
**dass** das Dichtmaterial (1) als zusätzlichen Bestandteil einen Weichmacher (15) mit einem Anteil kleiner 3 Gewichtsanteilen, vorzugsweise zwischen 0,3 und 1,5 Gewichtsanteilen, zur besseren Verarbeitbarkeit des Dichtmaterials (1) umfasst.

3. Die Vakuumdichtung nach einem der Ansprüche 1 oder 2,
**dadurch gekennzeichnet,**
**dass** das Dichtmaterial (1) als zusätzlichen Bestandteil ein Material zur Säureneutralisierung (16) mit einem Anteil kleiner 5,0 Gewichtsanteilen, vorzugsweise zwischen 0,5 und 3,0 Gewichtsanteilen umfasst.

4. Die Vakuumdichtung nach einem der voranstehenden Ansprüche,
**dadurch gekennzeichnet,**
**dass** das Dichtmaterial (1) als zusätzlichen Bestandteil ein Antioxidant-Material (17) mit einem Anteil kleiner 5,0 Gewichtsanteilen, vorzugsweise zwischen 0,5 und 3,0 Gewichtsanteilen umfasst.

5. Die Vakuumdichtung nach einem der voranstehenden Ansprüche,
**dadurch gekennzeichnet,**
**dass** das Füllmaterial (12) chemisch inert ist, vorzugsweise ist das Füllmaterial (12) Ruß.

6. Die Vakuumdichtung nach Anspruch 5,
**dadurch gekennzeichnet,**
**dass** der Anteil des Füllmaterials (12) an dem Dichtmaterial (1) zwischen 70 und 100 Gewichtsanteilen liegt.

7. Die Vakuumdichtung (2) nach einem der voranstehenden Ansprüche,
**dadurch gekennzeichnet,**
**dass** die Vakuumdichtung (2) als O-Ring-Dichtung (21) ausgestaltet ist.

8. Die Vakuumdichtung (2) nach einem der voranstehenden Ansprüche,
**dadurch gekennzeichnet,**
**dass** die Vakuumdichtung (2) als Metall-Elastomer-Verbunddichtung (22) mit einem geeignet geformten Metallkern (221) umhüllt von dem Dichtmaterial (1) ausgestaltet ist.

9. Die Vakuumdichtung (2) nach einem der voranstehenden Ansprüche,
**dadurch gekennzeichnet,**
**dass** die Bestandteile des Dichtmaterials (1) so gewählt sind, dass die Vakuumdichtung (2) eine Leckrate kleiner als 10⁻⁹ mbar*L/s besitzt.

10. Ein Verfahren zur Herstellung einer Vakuumdichtung (2) nach Anspruch 1 umfassend die Schritte
- Bereitstellen eines Dichtmaterials (1) umfassend ein Brombutyl-Elastomer (11) mit einem Anteil von 100 Gewichtsanteilen, ein Füllmaterial (12) mit einem Anteil zwischen 10 und 100 Gewichtsanteilen zur Einstellung des Volumens des Dichtmaterials (1), einen Härter (13) mit einem Anteil zwischen 0,5 und 3,0 Gewichtsanteilen zum Aushärten des Dichtmaterials (1) und eine Vernetzungskomponente (14) mit einem Anteil zwischen 0,1 und 2,0 Gewichtsanteilen zur Herstellung einer peroxidischen Vernetzung des Dichtmaterials (1) zur Bereitstellung der gewünschten Gasdichtigkeit;
- Formen (F) der Vakuumdichtung (2) aus dem Dichtmaterial (1); und
- Aushärten (A) des Dichtmaterials (1) der geformten Vakuumdichtung (2) bei einer geeigneten Aushärtetemperatur (AT) und einer geeigneten Aushärtezeit (AZ) zur Fertigstellung der Vakuumdichtung (2).

11. Das Verfahren nach Anspruch 10, des Weiteren umfassend den Schritt des Einstellens (E) des verfügbaren Zeitintervalls zur Verarbeitung des Dichtmaterials (1) zu einer Vakuumdichtung (2) mittels Anpassung des Anteils des Weichmachers (15).

12. Das Verfahren nach Anspruch 10 oder 11, des Weiteren umfassend den Schritt des Formens (F) der Vakuumdichtung (2) den Schritt des Umhüllens (U) eines geeignet geformten Metallkerns (221) mit dem Dichtmaterial (1) zur Herstellung einer Metall-Elastomer-Verbunddichtung (22) umfasst.

## Claims

1. A vacuum seal (2) made of a sealing material (1) whose constituents include a bromobutyl elastomer (11) in an amount of 100 parts by weight, a filler material (12) in an amount between 10 and 100 parts by weight for setting the volume of the sealing material (1), a curing agent (13) in an amount between 0.5 and 3.0 parts by weight for curing the sealing material (1), and a cross-linking component (14) in an amount between 0.1 and 2.0 parts by weight for bringing about a peroxidic cross-linking of the sealing material (1) in order to attain the desired gas-tightness.

2. The vacuum seal according to claim 1,
**characterized in that**
the sealing material (1) contains, as an additional constituent, a plasticizer (15) in an amount of less than 3 parts by weight, preferably between 0.3 and 1.5 parts by weight, which serves to improve the processing properties of the sealing material (1).

3. The vacuum seal according to one of claims 1 or 2,
**characterized in that**
the sealing material (1) contains, as an additional constituent, a material for acid neutralization (16) in an amount of less than 5.0 parts by weight, preferably between 0.5 and 3.0 parts by weight.

4. The vacuum seal according to one of the preceding claims,
**characterized in that,**
the sealing material (1) contains, as an additional constituent, an antioxidant material (17) in an amount of less than 5.0 parts by weight, preferably between 0.5 and 3.0 parts by weight.

5. The vacuum seal according to one of the preceding claims,
**characterized in that**
the filling material (12) is chemically inert, preferably the filling material (12) is soot.

6. The vacuum seal according to claim 5,
**characterized in that**
the amount of filler material (12) in the sealing material (1) is between 70 and 100 parts by weight.

7. The vacuum seal (2) according to one of the preceding claims,
**characterized in that**
the vacuum seal (2) is configured as an O-ring seal (21).

8. The gas seal (2) according to one of the preceding claims,
**characterized in that**
the gas seal (2) is configured as a metal-elastomer composite seal (22) with a suitably shaped metal core (221) encapsulated by the sealing material (1).

9. The vacuum seal (2) according to one of the preceding claims,
**characterized in that**
the constituents of the sealing material (1) are selected in such a way that the vacuum seal (2) has a leakage rate of less than 10⁻⁹ mbar*L/s.

10. The method for the production of a vacuum seal (2) according to claim 1, comprising the following steps:
• providing a sealing material (1) containing a bromobutyl elastomer (11) in an amount of 100 parts by weight, a filler material (12) in an amount between 10 and 100 parts by weight for setting the volume of the sealing material (1), a curing agent (13) in an amount between 0.5 and 3.0 parts by weight for curing the sealing material (1), and a cross-linking component (14) in an amount between 0.1 and 2.0 parts by weight for bringing about a peroxidic cross-linking of the sealing material (1) in order to attain the desired gas-tightness,
• shaping (F) the vacuum seal (2) made of the sealing material (1); and
• curing (A) the sealing material (1) of the shaped vacuum seal (2) at a suitable curing temperature (AT) and for a suitable curing time (AZ) in order to produce the vacuum seal (2).

11. The method according to claim 10, also comprising the step of setting (E) the available time interval for processing the sealing material (1) to form a vacuum seal (2), which is done by adjusting the amount of plasticizer (15).

12. The method according to claim 10 or 11, also comprising the step of shaping (F) the vacuum seal (2), and comprising the step of encapsulating (U) a suitably shaped metal core (221) with the sealing material (1) in order to produce a metal-elastomer composite seal (22).

## Revendications

1. Joint étanche au vide (2) composé d'un matériau d'étanchéité (1) comprenant, en tant que composants, un élastomère de bromobutyle (11) avec une fraction de 100 parties en poids, un matériau de remplissage (12) avec une fraction comprise entre 10 et 100 parties en poids pour le réglage du volume du matériau d'étanchéité (1), un durcisseur (13) avec une fraction comprise entre 0,5 et 3,0 parties en poids pour le durcissement du matériau d'étanchéité (1) et un composant de réticulation (14) avec une fraction comprise entre 0,1 et 2,0 parties en poids pour la réalisation d'une réticulation peroxydique du matériau d'étanchéité (1) pour fournir l'étanchéité aux gaz souhaitée.

2. Le joint étanche au vide selon la revendication 1, **caractérisé en ce que** le matériau d'étanchéité (1) comprend, en tant que composant supplémentaire, un plastifiant (15) avec une fraction inférieure à 3 parties en poids, préférentiellement comprise entre 0,3 et 1,5 partie en poids, pour permettre de mieux travailler le matériau d'étanchéité (1).

3. Le joint étanche au vide selon l'une des revendications 1 ou 2, **caractérisé en ce que** le matériau d'étanchéité (1) comprend, en tant que composant supplémentaire, un matériau de neutralisation des acides (16) avec une fraction inférieure à 5,0 parties en poids, préférentiellement comprise entre 0,5 et 3,0 parties en poids.

4. Le joint étanche au vide selon l'une des revendications précédentes, **caractérisé en ce que** le matériau d'étanchéité (1) comprend, en tant que composant supplémentaire, un matériau antioxydant (17) avec une fraction inférieure à 5,0 parties en poids, préférentiellement comprise entre 0,5 et 3,0 parties en poids.

5. Le joint étanche au vide selon l'une des revendications précédentes, **caractérisé en ce que** le matériau de remplissage (12) est chimiquement inerte, le matériau de remplissage (12) étant préférentiellement de la suie.

6. Le joint étanche au vide selon la revendication 5, **caractérisé en ce que** la fraction du matériau de remplissage (12) par rapport au matériau d'étanchéité (1) est comprise entre 70 et 100 parties en poids.

7. Le joint étanche au vide (2) selon l'une des revendications précédentes, **caractérisé en ce que** le joint étanche au vide (2) est réalisé en tant que joint torique (21).

8. Le joint étanche au vide (2) selon l'une des revendications précédentes, **caractérisé en ce que** le joint étanche au vide (2) est réalisé en tant que joint composite d'élastomère et de métal (22) avec un noyau métallique (221) formé de manière appropriée et entouré du matériau d'étanchéité (1).

9. Le joint étanche au vide (2) selon l'une des revendications précédentes, **caractérisé en ce que** les composants du matériau d'étanchéité (1) sont choisis de manière telle que le joint étanche au vide (2) présente un taux de fuite inférieur à 10⁻⁹ mbar*L/s.

10. Procédé de fabrication d'un joint étanche au vide (2) selon la revendication 1, comprenant les étapes suivantes :
- fourniture d'un matériau d'étanchéité (1) comprenant, en tant que composants, un élastomère de bromobutyle (11) avec une fraction de 100 parties en poids, un matériau de remplissage (12) avec une fraction comprise entre 10 et 100 parties en poids pour le réglage du volume du matériau d'étanchéité (1), un durcisseur (13) avec une fraction comprise entre 0,5 et 3,0 parties en poids pour le durcissement du matériau d'étanchéité (1) et un composant de réticulation (14) avec une fraction comprise entre 0,1 et 2,0 parties en poids pour la réalisation d'une réticulation peroxydique du matériau d'étanchéité (1) pour fournir l'étanchéité aux gaz souhaitée ;
- formation (F) du joint étanche au vide (2) à partir du matériau d'étanchéité (1) et
- durcissement (A) du matériau d'étanchéité (1) du joint étanche au vide formé (2) à une température de durcissement appropriée (AT) et avec un temps de durcissement approprié (AZ) pour achever le joint étanche au vide (2).

11. Le procédé selon la revendication 10, comprenant en outre l'étape de réglage (E) de l'intervalle de temps disponible pour le traitement du matériau d'étanchéité (1) pour obtenir un joint étanche au vide (2) par adaptation de la fraction du plastifiant (15).

12. Le procédé selon la revendication 10 ou 11, comprenant en outre l'étape de formation (F) du joint étanche au vide (2) et l'étape d'enveloppement (U) d'un noyau métallique formé de manière appropriée (221) au moyen du matériau d'étanchéité (1) pour réaliser un joint composite d'élastomère et de métal (22).
